# EUROPÄISCHE PATENTSCHRIFT

(11) **EP 2 272 624 B1**
(45) Veröffentlichungstag und Bekanntmachung des Hinweises auf die Patenterteilung: **01.06.2011**
(21) Anmeldenummer: 09008991.3
(22) Anmeldetag: 09.07.2009
(51) Int. Cl.: B23Q 1/66, B23Q 39/02

(54) **Drehmaschine mit zwei Werkstückspindeln**
Lathe with two workpiece spindles
Machine rotative dotée de deux broches de pièces usinées

(43) Veröffentlichungstag der Anmeldung: 12.01.2011
(73) Patentinhaber: Liese, Günther, 34320 Söhrewald (DE)
(72) Erfinder: Liese, Alexander, 34277 Fuldabrück (DE)
(74) Vertreter: Reinhardt, Thomas Johannes

(56) Entgegenhaltungen:
- AT-B- 264 965
- GB-A- 1 273 505
- US-A- 5 514 061

## Beschreibung

### Stand der Technik

Die vorliegende Erfindung betrifft das technische Gebiet der Werkzeugmaschinen der und insbesondere eine Drehmaschine nach dem Oberbegriff von Anspruch 1.

Drehmaschinen sind Werkzeugmaschinen, die zur Herstellung von meist runden Werkstücken durch Trennen des Werkstoffes vom Werkstück mit einer Schneide verwendet werden. Meist wird das Werkstück gedreht und ein nichtdrehendes Werkzeug mit der vorgenannten Schneide greift das Werkstück ein in einer spanabhebenden Bearbeitungsweise. An einer Drehmaschine werden Rotationskörper hergestellt, wobei Zusatzeinrichtungen vorhanden sein können, die es ermöglichen, auch Formen herzustellen, die nicht rotationsymmetrisch sind. Die Schnittbewegung wird dadurch vollzogen, dass das Werkstück rotiert während das Schneidwerkzeug fest auf einen Werkzeugschlitten gespannt ist und kontinuierlich spanabnehmend im Eingriff am Werkstück ist. Der das Werkzeug tragende Schlitten kann im Allgemeinen auf einer entsprechenden Führungsschiene längs und/oder quer zur Rotationsachse des Werkstücks entlang der zu bearbeitenden Fläche bewegt werden.

Soll das Werkstück gewechselt werden, weil es fertig bearbeitet ist, muss die sich drehende Werkstückspindel angehalten werden, indem die Drehbewegung abgebremst wird, das Werkstück muss aus seiner Spannvorrichtung entfernt werden und ein neues Werkstück eingesetzt werden. Dann wird das neue Werkstück eingespannt, wobei meist eine Zentrierung automatisch erfolgt und die Drehbewegung wird wieder aufgenommen. Dann wird das Werkzeug wieder mit dem Werkstück in Eingriff gebracht und die weitere Bearbeitung kann erfolgen.

Für den Werkstückwechsel kann der Werkzeugrevolver aus einer Bearbeitungsposition in eine Werkstückwechselposition gefahren werden, damit der Werkstückwechsel leichter handhabbar ist.

Eine solche Drehmaschine ist in ihrem Gebrauch zwar zuverlässig, jedoch benötigt der Werkstückwechsel in nachteilhafter Weise eine zu lange Zeit. Dieser Nachteil wirkt sich umso gravierender aus, je kürzer die eigentliche Bearbeitungszeit des Werkstücks ist.

Die so genannte "Span zu Span-Zeit" ist diejenige Zeit, während der keine Werkstückbearbeitung erfolgen kann, weil das Werkstück gewechselt wird.

In der Österreichischen Patentschrift Nr. 264965 ist zur Reduzierung der Werkstückwechselzeiten ein Schwenkspindelmechanismus mit zwei Werkstückspindeln vorgesehen. Ein Elektromotor treibt über ein Getriebe und eine Kupplung entweder die eine oder die andere Werkzeugspindel an. Dadurch kann die eine Werkstückspindel das Werkstück während der Bearbeitung drehen, und die andere Werkstückspindel ist zeitgleich außerhalb des Bearbeitungsraums und steht für einen Werkstückwechsel zur Verfügung.
In nachteilhafter Weise ist die oben erwähnte "Span-zu-Span-Zeit" jedoch noch zu lang.

Daher besteht die Aufgabe der vorliegenden Erfindung darin, eine Bearbeitungsmaschine, insbesondere eine Drehmaschine derart weiterzubilden, dass die "Span-zu-Span-Zeitspanne" verringert wird.

### Kurzzusammenfassung und Vorteile der Erfindung

Mit den Maßnahmen des unabhängigen Anspruches wird diese Aufgabe gelöst.

In den Unteransprüchen sind vorteilhafte Ausgestaltungen Weiterbildungen und Verbesserungen des jeweiligen Gegenstandes der Erfindung angegeben.

Kurz zusammengefasst enthält die vorliegende Erfindung die Idee, an der die Werkstückspindel tragenden Einheit nicht nur eine einzige Werkstückspindel anzubringen, sondern eine Mehrzahl davon, bevorzugt zwei Werkstückspindeln. Die beiden Werkstückspindeln sind im wesentlichen voneinander unabhängig und so angebracht, dass die zweite Werkstückspindel den Bearbeitungsvorgang nicht stört, der mit der ersten Werkstückspindel gerade ausgeführt wird, wobei die Werkstückspindeln jeweils über einen separaten Elektromotor verfügen.

Beide Spindeln sind mit Werkstückspannmitteln ausgerüstet, wie sie im Stand der Technik bekannt sind. Erfindungsgemäß ist die Anordnung der beiden Werkstückspindeln an einer gemeinsamen Verfahreinheit derart, dass, während eine von den beiden Spindeln mit einem Werkstück im Bearbeitungsraum den Bearbeitungsprozess durchläuft, an der zweiten Spindel gleichzeitig zum Bearbeitungsprozess, aber außerhalb des Bearbeitungsraumes ein Ent- und Beladen des Werkstückes erfolgen kann. Diese Be- und Entladung der jeweils nicht zur Werkstückbearbeitung benötigten Werkstückspindel kann manuell vom Bediener der Maschine oder auch automatisch durchgeführt werden. Dabei kann entweder ein neues, rohes, unbearbeitetes Werkstück eingespannt werden oder ein bereits bearbeitetes Werkstück kann in einer anderen Position eingespannt werden, damit es entsprechend neu bearbeitet werden kann. Die Verfahrbewegung der Spindelträgereinheit ist vorzugsweise eine Schwenkbewegung, sie kann aber auch eine translatorische Bewegung sein.

Die oben genannte, kritische und gering zu haltende "Span zu Span-Zeit" wird erfindungsgemäß daher im Wesentlichen allein von dem Verfahr- oder Schwenkvorgang der beiden Spindeln bestimmt. Dabei ist die Bewegung in bevorzugter Weise so definiert, dass es lediglich zwei Stellungen gibt, dass also in jeder der beiden Endstellungen der Bewegung jeweils ein Werkstück mit dem Werkzeug in Eingriff gebracht werden kann.

In vorteilhafter Weise kann daher der komplexe und fehleranfällige Vorgang des Einspannens des Werkstücks deutlich sorgfältiger und im Prinzip ohne Zeitverlust durchgeführt werden, denn er wird ja während der Bearbeitungszeit des jeweils anderen Werkstückes durchgeführt, wodurch man keinerlei Zeitverlust hinnehmen muss.

In vorteilhafter Weise ist nur eine einzige Antriebselektronik vorgesehen, die dann jeweils dazu wechselweise benutzt werden kann, um die Werkstückspindel in Drehbewegung zu versetzen. Es findet dabei also jeweils ein aktives Umschalten des Antriebs von der einen Werkstückspindel auf die andere statt.

In vorteilhafter Weise kann die Bewegungsenergie der ersten Spindel beim Abbremsen durch die Brems- Induktionswirkung des dann als Generator benutzten Elektromotors in das Netz zurückgespeist werden und zumindest teilweise zur Beschleunigung der zweiten Spindel benutzt werden. Dies erhöht die Energieeffizienz der erfindungsgemäßen Drehmaschine.

Die erfindungsgemäße Schwenkspindelanordnung mit zwei unabhängigen Werkstückspindeln kann jeweils auch mit einem Reitstock verwendet werden, um das Werkstück gezielt zu unterstützen. Hierzu wird auf den einschlägigen Stand der Technik verwiesen.

Das der Erfindung zugrunde liegende Prinzip der gleichzeitigen Be- und Entladung eines Werkstücks mit der Bearbeitung eines anderen Werkstücks kann auch insofern erweitert werden, indem nicht nur zwei, sondern gegebenenfalls drei oder vier, ganz allgemein mehrere Werkstückspindeln auf einer gemeinsamen Schwenkeinheit vorgesehen sind. Dies kann sich insbesondere dann empfehlen, wenn eine komplexere Bearbeitung der Werkstücke mit unterschiedlichen Einspannlokationen derselben Werkstücke in einer entsprechend mehrstufigen Bearbeitungsweise erforderlich ist, und/ oder wenn ein gewisser Puffer an fertig vorbereiteten und eingespannten Werkstücken vorhanden sein sollte, um eine möglichst hohe Produktionsrate an fertigen Werkstücken zu erzielen.

Die Anordnung des Spindelstocks oder Spindelträgers, der wenigstens zwei Werkstückspindeln trägt, am Gestell der Drehmaschine sowie die relative Orientierung des Schwenkspindelstocks zum Werkzeugschlitten und dessen linearer Richtung kann vielfach modifiziert werden. Die in den Zeichnungen gezeigten Beispiele sollen einige dieser möglichen Variationen veranschaulichen.

### Zeichnungen

Anhand der Zeichnungen werden Ausführungsbeispiele der Erfindung erläutert.

Es zeigen:

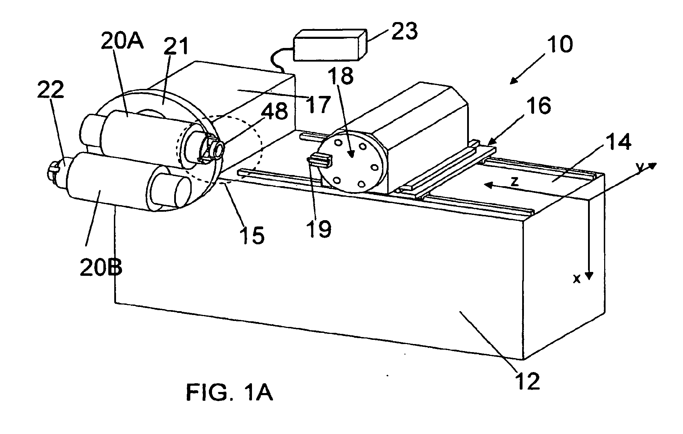

Figur 1A zeigt ein erstes Ausführungsbeispiel einer erfindungsgemäßen Drehmaschine mit zwei Spindeln, die auf einem Spindelträger befestigt sind, wobei der Spindelträger in der x-z-Ebene liegt, und wobei die Schwenkachse zum Verschwenken der beiden Spindeln in y-Richtung liegt, und wobei ein Flachbett für zwei übereinander angeordnete Schlitten in der y-z-Ebene vorhanden ist, wobei der untere Schlitten in z- Richtung und der obere in y- Richtung verfahrbar ist und der Aufbau auf dem oberen Schlitten aus Werkzeugrevolver samt Antrieb und Lagerung des Revolvers somit in y- und z-Richtung verfahrbar ist;
Figur 1B zeigt eine vergrößerte Ausschnittsdarstellung eines Ausführungsbeispiels der erfindungsgemäßen Drehmaschine mit Schwenkspindel, bei der auch die Anordnung der elektrischen Anschlüsse und Details des Bearbeitungsraumes genauer gezeigt sind;
Figur 1C zeigt das Ausführungsbeispiel aus Figur 1A mit als massives Bauteil gebildetem Spindelträger in den unter anderem die Spindeln eingesetzt sind;
Figur 1D zeigt eine Vorderansicht zu Figur 1C mit Schnittlinie A-A für Figur 15 sowie Schnittlinie B-B für Figur 16;
Figur 1E zeigt eine Draufsicht zu Figur 1C mit Schnittlinie C-C für Figur 17;
Figur 2 zeigt ein weiteres Ausführungsbeispiel, wobei im Gegensatz zu Figur 1 der Werkzeugrevolveraufbau in der x-z-Ebene in z- und x- Richtung verfahrbar ist;
Figur 3 zeigt ein weiteres Ausführungsbeispiel, wobei die erfindungsgemäße Schwenkspindel um die x-Achse verschwenkt und der Schwenkträger parallel zur x-y-Ebene liegt, und der Werkzeugrevolveraufbau in der y-z-Ebene in y- und z-Richtung verfahrbar ist;
Figur 4 zeigt ein weiteres Ausführungsbeispiel gemäß den Figuren 1A, 1B, wobei ein Reitstock zum Abstützen des freien Endes eines eingespannten Werkstücks vorgesehen ist;
Figur 5 zeigt ein Ausführungsbeispiel gemäß Figur 3, bei dem ebenfalls ein solcher Reitstock vorgesehen ist;
Figur 6 zeigt ein weiteres Ausführungsbeispiel einer erfindungsgemäßen Drehmaschine mit einem Werkzeugrevolveraufbau, der in der x-z-Ebene in x- und z-Richtung verfahrbar ist und bei dem auf dem Spindelträger zwei Werkstückspindeln vorgesehen sind, wobei deren beider Spindelachsen eine gemeinsame Achse bilden, und wobei die Schwenkachse in x-Richtung liegt;
Figur 7 zeigt ein weiteres Ausführungsbeispiel, das gegenüber dem aus Figur 6 insgesamt um 90 Grad gedreht im Raum orientiert ist, so dass der Werkzeugrevolveraufbau in der y-z-Ebene in y- und z-Richtung verfahrbar ist;
Figur 8 zeigt ein weiteres Ausführungsbeispiel, bei dem in Abwandlung zu dem Beispiel aus Figur 6 der Werkzeugrevolveraufbau in der y-z-Ebene in y- und z-Richtung verfahrbar ist;
Figur 9 zeigt ein weiteres Ausführungsbeispiel analog zu Figur 8, das jedoch als Ganzes um 90 Grad gedreht ist;
Figur 10 zeigt ein weiteres Ausführungsbeispiel, bei dem der Spindelträger auf einer Achse gelagert ist, die in y-Richtung verläuft und an beiden gegenüberliegenden Seiten des Spindelträgers ein Auflager am Gestell der Drehmaschine besitzt wobei ein Späneförderer vorgesehen ist;
Figur 11 zeigt ein Ausführungsbeispiel, bei dem ein Spindelträger mit vier Spindeln vorgesehen ist, die einer Kreuzanordnung am Spindelträger befestigt sind, und wobei die Schwenkbewegung um die y-Achse verläuft und wobei der Werkzeugrevolveraufbau in der y-z-Ebene in y- und z-Richtung verfahrbar ist;
Figur 12 zeigt ein weiteres Ausführungsbeispiel, bei dem in Abwandlung zum Ausführungsbeispiel von Figur 2 nicht nur eine einzige Seitenfläche des Drehmaschinengestells mit Spindelträger und Werkzeugschlitten versehen ist, sondern auch die gegenüberliegenden, dazu parallele Seitenfläche ebenfalls mit einer solchen Anordnung versehen ist;
Figur 13A in einer schematischen Darstellung und Figur 13B in einer etwas vereinfachenden Darstellung zeigen ein weiteres Ausführungsbeispiel einer erfindungsgemäßen Drehmaschine, bei der der Spindelträger zwei Spindeln trägt, deren Achsen übereinstimmen, wobei aber der Spindelträger nicht verschwenkt wird, sondern translatorisch bewegt wird, um die jeweils andere Spindel in den Bearbeitungsraum zu bringen;
Figur 14 zeigt eine schematische Schaltskizze zur Rückspeisung von elektrischem Strom beim Abbremsen einer Spindel;
Figur 15 zeigt eine erste Schnittdarstellung längs der Linie A-A aus dem Ausführungsbeispiel gemäß Figur 1D;
Figur 16 zeigt eine zweite Schnittdarstellung der Linie B-B aus Figur 1D;
Figur 17 zeigt eine dritte Schnittdarstellung längs der Linie C-C aus dem Ausführungsbeispiel gemäß Figur 1E;

### Beschreibung von Ausführungsbeispielen

In den Figuren bezeichnen gleiche Bezugszeichen gleiche oder funktionsgleiche Komponenten. Zunächst wird auf Figur 1A Bezug genommen:

Das Gestell 12 einer erfindungsgemäßen Drehmaschine 10 besteht aus einem quaderförmigen Grundkörper, der das Maschinenbett 14 beinhaltet und auf dessen Oberfläche der Werkzeugschlitten 16 gemäß Stand der Technik eingerichtet ist. Das Gestell 12 enthält weiter einen quaderförmigen Aufsatz am links dargestellten Ende des quaderförmigen Grundkörpers, wobei der Aufsatz eine nicht dargestellte Aufnahme für die Schwenkachse eines Spindelträgers 21 enthält. Der Spindelträger 21 besitzt eine Achse, die mit einem Elektromotor (nicht dargestellt) verbunden ist, der im Innern des Aufsatzes 17 befindlich ist. Der Elektromotor kann erfindungsgemäß so angesteuert werden, dass der erfindungsgemäße Schwenkspindelträger mit seinen beiden darauf fest montierten Spindeln 20A, 20B jeweils um 180 Grad hin- und hergeschwenkt werden kann, um jeweils eine der beiden Spindeln 20 in den Bearbeitungsraum zu bringen, der das unmittelbare Umfeld zwischen Werkstück 48 und Werkzeug 19 darstellt. Der Bearbeitungsraum ist mit Bezugszeichen 15 schematisch angedeutet.

Das Werkzeug 19 ist wie im Stand der Technik üblich an einem Werkzeugrevolver mittels einer Einspanneinrichtung fixiert und kann über eine Bewegung des Schlittens 16 in Eingriff mit dem Werkstück gebracht werden. Das Werkzeug ist auf dem Schlitten seinerseits in y-Richtung und der Schlitten selbst in z-Richtung in jeweiligen Schienenführungen verfahrbar. Die zugehörigen Antriebe sind aus dem Stand der Technik bekannt. Hier können zweckmäßigerweise elektrische Servomotoren, Linearmotoren oder Schrittmotoren, verwendet werden.

Der oben genannte Vorteil, das ein Werkstückwechsel oder ein Neueinspannen des gleichen Werkstücks während der Bearbeitung eines anderen Werkstücks stattfinden kann, wird dem Durchschnittsfachmann aufgrund der Schwenkmöglichkeit des Spindelträgers und dem gleichzeitigen Vorhandensein von zwei, praktisch identischen Werkstückspindeln unmittelbar klar, denn die zweite Werkstückspindel 20B kann ja in der Bearbeitungszeit für das Werkstück von Spindel 20A be- oder entladen werden. Daher nimmt ein Werkstückwechsel oder ein Umspannen des alten Werkstücks praktisch keine zusätzliche Zeit zur Bearbeitungszeit in Anspruch.

Die möglichst schnelle und präzise geführte Drehbewegung der Schwenkspindel geschieht in vorteilhafter Weise mit Hilfe eines elektronisch gesteuerten Servomotors, der über eine separate Programmschnittstelle programmiert werden kann. Er vollführt in vorteilhafter Weise eine Drehbewegung um 180 Grad in der einen Richtung, und dann wieder eine Drehbewegung zurück um 180 Grad in die entgegen gesetzte Richtung. Auf diese Weise kann vermieden werden, dass eventuell vorhandene Kabelführungen oder Wasser- oder Luftführungen, deren eines Ende jeweils an einem drehbewegten Teil hängt und dessen anderes Ende an einem festen Teil hängt, sich unbegrenzt oft um die Schwenkachse wickeln würde. Dies gilt es im Hinblick auf eine technisch einfache und robuste Bauweise zu vermeiden. Wenn dies eine untergeordnete Rolle spielen sollte, können auch im Stand der Technik bekannte Drehdurchführungen für Luft oder Wasser und Schleifringe oder drahtlose elektrische Verbindungen soweit wie möglich verwendet werden. Als Schwenkantrieb sind auch pneumatische oder hydraulische Antriebe verwendbar.

Über ein im Stand der Technik bekanntes Mess- und Steuersystem wird bei der Drehung oder der Schwenkbewegung des Spindelgehäuses bzw. Spindelträgers der Drehwinkel /Schwenkwinkel erfasst und ausgewertet, und der Motor für die Schwenkbewegung des Spindelgehäuses entsprechend angesteuert, damit dieses im richtigen Winkel zum Stillstand kommen kann. Die Drehbewegung des Spindelgehäuses erfolgt in dieser Darstellung mittels Servomotor mit Ritzel und Zahnkranz. Ist das Gehäuse zum Stillstand gekommen, wird das Spindelgehäuse mit einer hydraulisch betätigten Planverzahnung blockiert und in der notwendigen Wiederholgenauigkeit positioniert, die sogenannte Indexierung der Spindeln kann also auf diese Weise erfolgen.

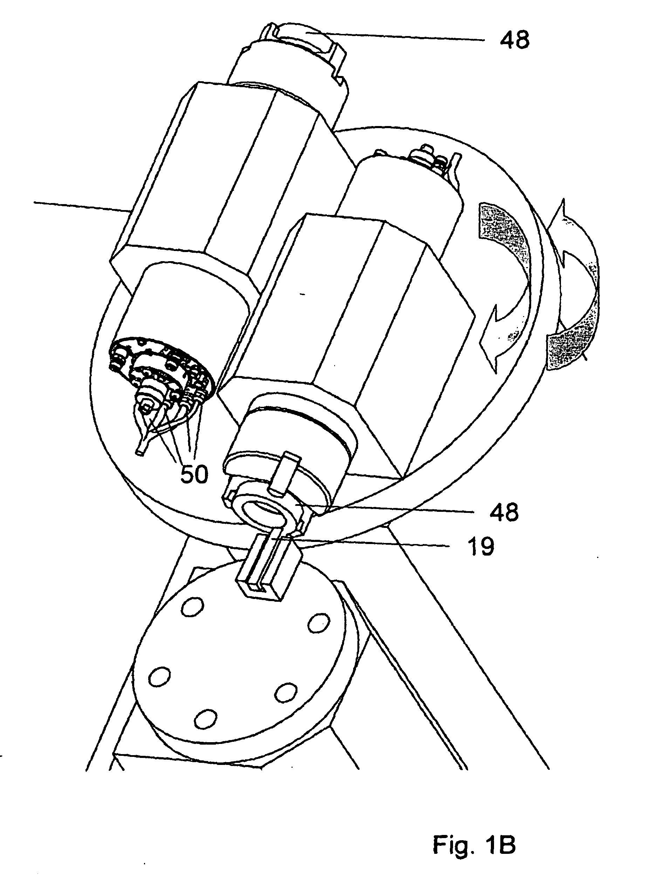

Gemäß Figur 1B ist zur weiteren Erläuterung der Figur 1A und der meisten der folgenden Ausführungsbeispiele eine detailliertere Darstellung gezeigt, bei dem erkennbar ist, dass bevorzugt zwei separate Werkstückspindeln zum Einsatz kommen, die jeweils als kompakte Baueinheit ausgeführt sind und über jeweils einen separaten Elektromotor mit jeweiligen elektrischen Anschlüssen 50 verfügen. Die rechts gezeichnete Spindel trägt das Werkstück 48, das im Eingriff mit dem Werkzeug 19 gezeichnet ist. Beide Spindeln sind je in einen Lagerungsklotz eingebaut und bilden eine so genannte Spindeleinheit. In bevorzugter Weise sind die Lagerungsklötze für die Spindeln einstückig mit dem Spindelträger hergestellt, beispielsweise als massives Gussteil mit entsprechend der Spindelgröße genau passenden Aussparungen.

Die Kopplungen beider Spindeln zu einer gemeinsam vorgesehenen Antriebssteuerung erfolgt jeweils separat, ist aber in Figur 1B nicht abgebildet.

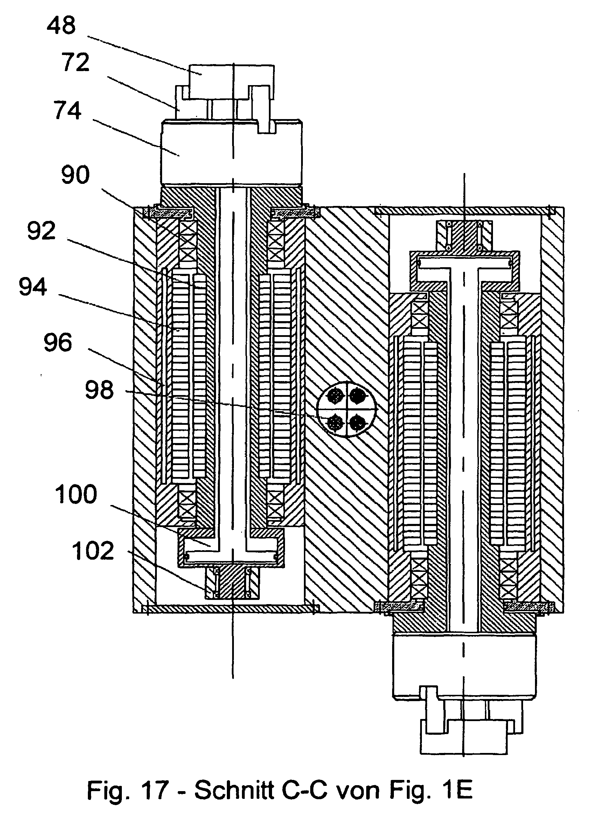

Die zugehörige Antriebssteuerung für die Spindelbewegung beschleunigt die Spindel bevorzugt bereits zu Beginn der Schwenkbewegung aus der Werkstückwechselzone in den Bearbeitungsraum. Analog dazu wird bevorzugt die andere Spindel zeitgleich über den genannten Spindel-Elektromotor bereits zu Beginn der Schwenkbewegung aus dem Bearbeitungsraum in die Werkstückwechselzone abgebremst, indem man den Motor als Generator betreibt. Die aufeinander folgenden Schwenkbewegungen sind bevorzugt immer gegensinnig, wie in Fig. 17 gezeigt, um die Kabelführung für die elektrischen Anschlüsse einfach zu halten.

Die Antriebssteuerung für den Schwenkmotor für die Ausführung der Schwenkbewegung erfolgt bevorzugt synchronisiert mit der Beschleunigung bzw. Abbremsung der Spindelbewegungen. Beide Antriebssteuerungen können programmierte Steuerungen sein, und in einem einzigen Software-/ Hardwaremodul oder einer Kombination implementiert sein. Ein solches Steuermodul 23 ist samt Steuerkabeln schematisch mit in Figur 1A eingezeichnet.

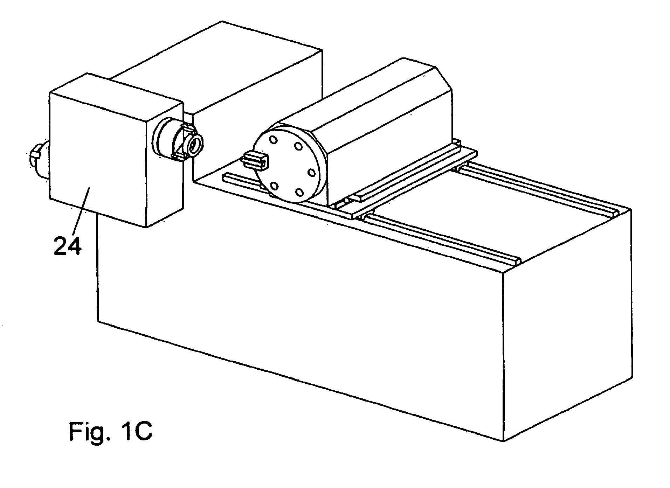

Die Figur 1C zeigt das Ausführungsbeispiel aus Figur 1A mit als massivem Bauteil gebildeten Spindelträger 24 in den unter anderem die Spindeln eingesetzt in darin vorbereitete passgenaue Aussparungen eingebettet sind; Als Material für den Spindelträger kommt ein ausreichend stabiles Material beispielsweise Aluminium, oder Edelstahl, oder, wenn hinsichtlich des Gewichts eine Optimierung betrieben werden soll, auch ein hochfester Kunststoff zur Verwendung;

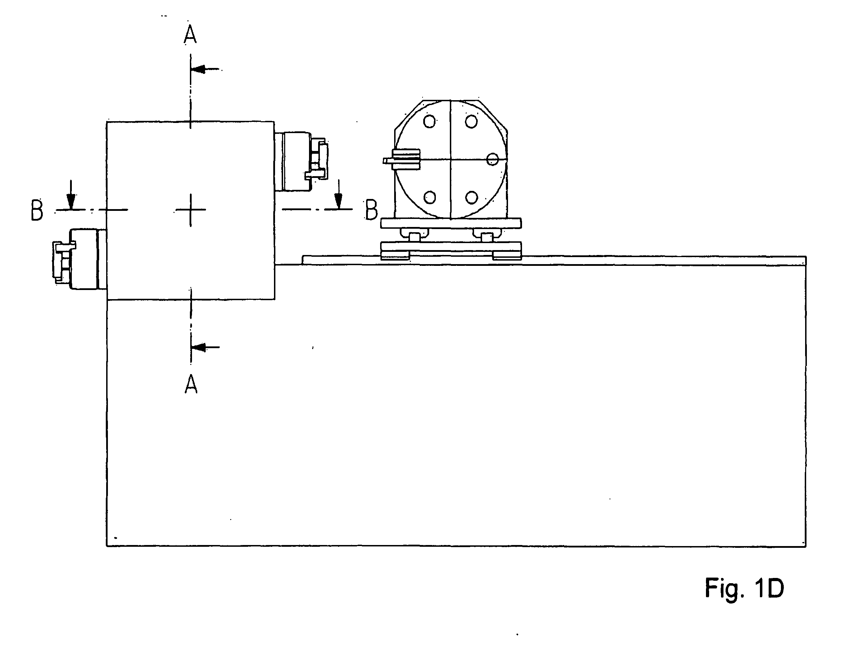

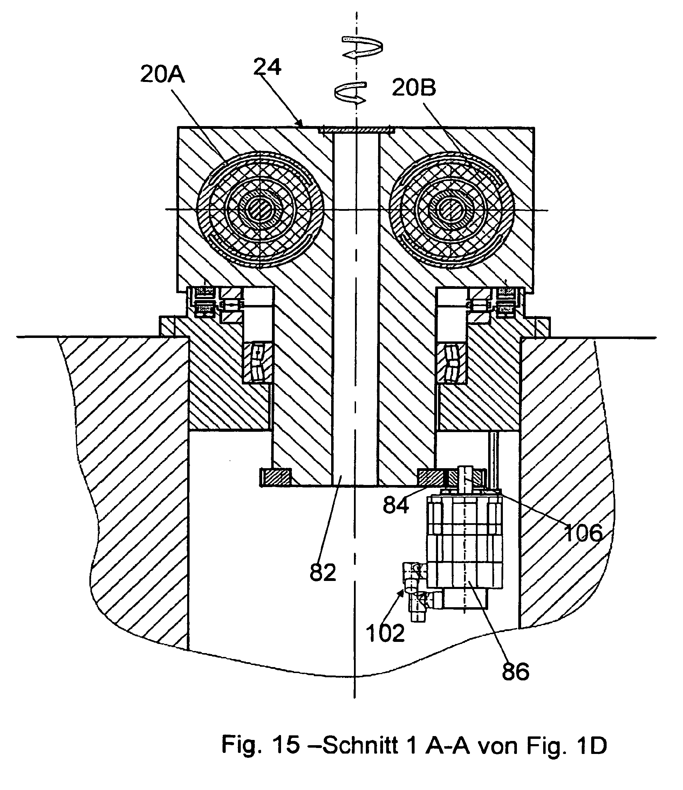

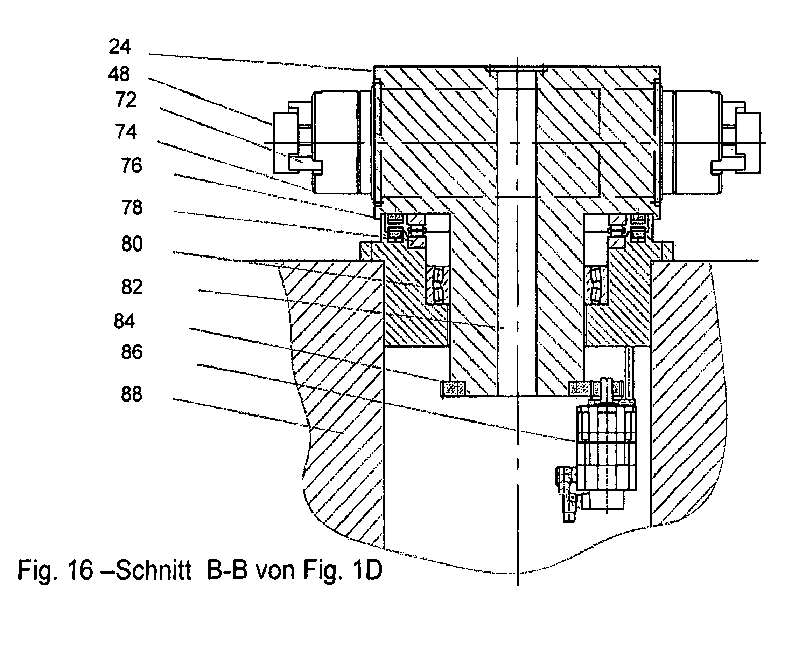

Die Figur 1D zeigt eine Vorderansicht zu Figur 1C mit Schnittlinie A-A für Figur 15 und B-B für Figur 16;

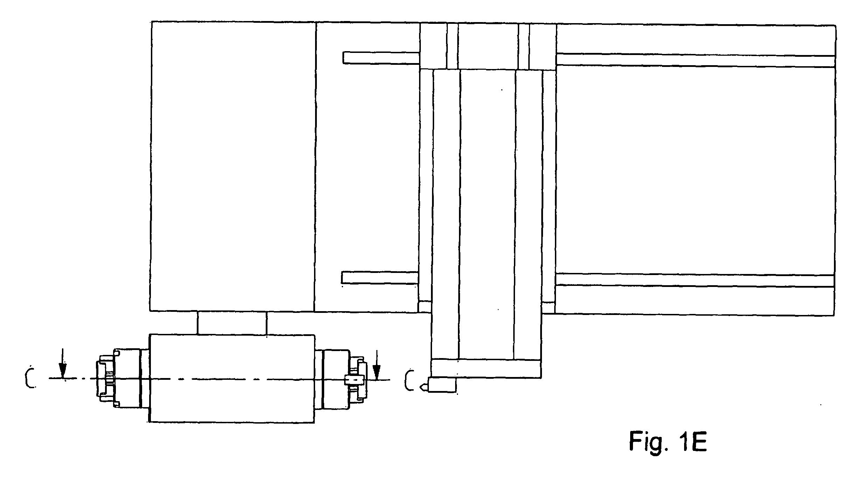

Die Figur 1E zeigt eine Draufsicht zu Figur 1C mit Schnittlinie C-C für Figur 17;

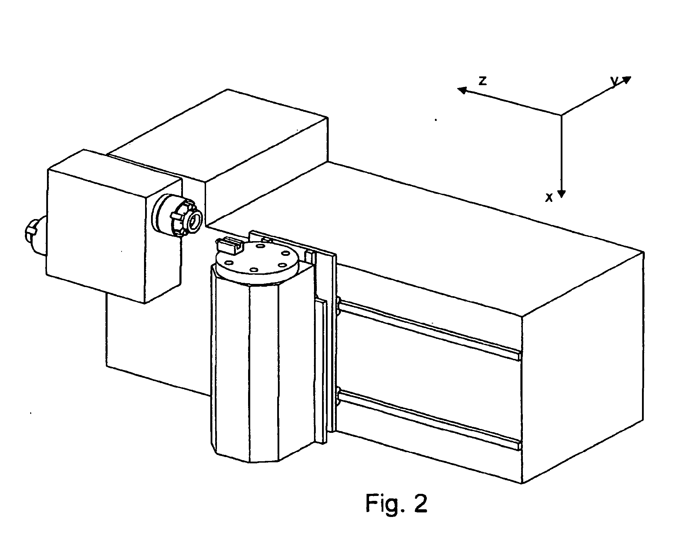

Die Figur 2 zeigt ein weiteres Ausführungsbeispiel, wobei im Gegensatz zu Figur 1 der Werkzeugrevolveraufbau in der x-z-Ebene in x-z-Richtung verfahrbar ist;

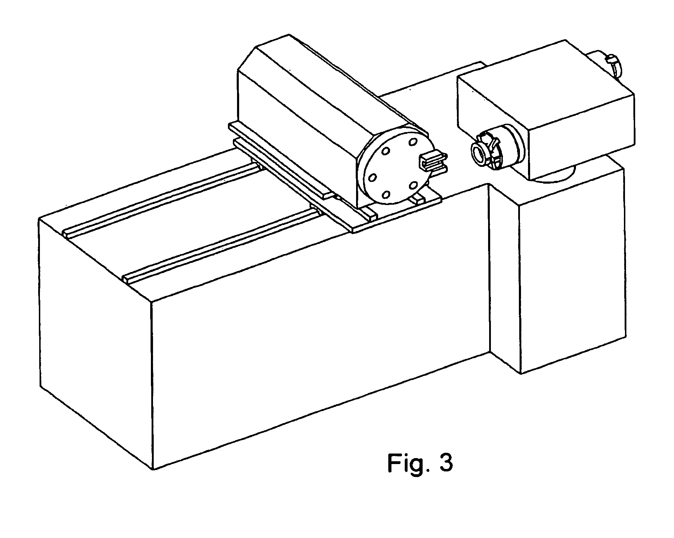

Die Figur 3 zeigt ein weiteres Ausführungsbeispiel, wobei die erfindungsgemäße Schwenkspindel um die x-Achse verschwenkt und der Schwenkträger parallel zur x-y-Ebene liegt, und der Werkzeugrevolveraufbau in der y-z-Ebene verfahrbar ist;

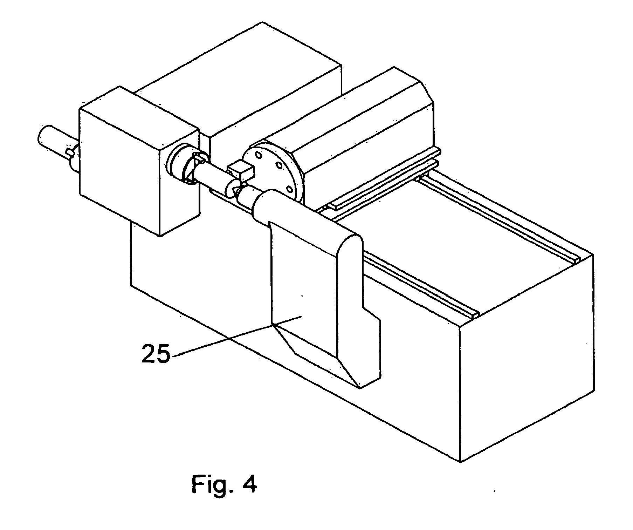

Die Figur 4 zeigt ein weiteres Ausführungsbeispiel gemäß den Figuren 1A bis 1E, wobei ein Reitstock 25 zum Abstützen des freien Endes eines eingespannten Werkstücks vorgesehen ist;

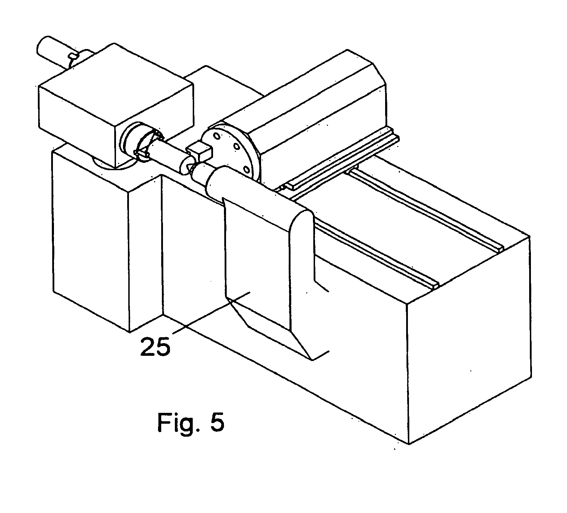

Figur 5 zeigt ein Ausführungsbeispiel gemäß Figur 3, bei dem ebenfalls ein solcher Reitstock 25 vorgesehen ist;

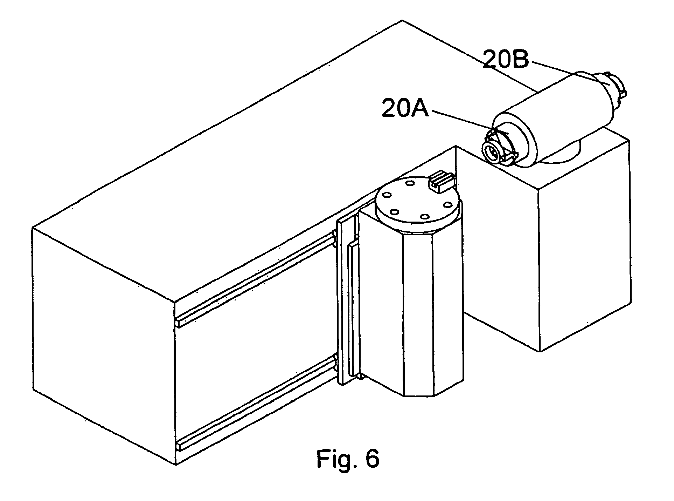

Die Figur 6 zeigt ein weiteres Ausführungsbeispiel einer erfindungsgemäßen Drehmaschine mit einem Werkzeugschlitten, der in der x-z-Ebene verfahrbar ist und bei dem auf dem Spindelträger zwei Werkstückspindeln vorgesehen sind, wobei deren beider Spindelachsen eine gemeinsame Achse bilden, und wobei die Schwenkachse in x-Richtung liegt;

Die Ausführungsform gemäß Figur 6 zeichnet sich gegenüber den vorbeschriebenen Ausführungsbeispielen vor allem dadurch aus, dass der Spindelträger samt Gehäuse etwas geringere äußere Abmessungen besitzt, da die Spindeln 20A und 20B in besonders kurzer Bauweise, aber auf einer gemeinsamen Achse angeordnet sind. Die hier vorgesehenen elektrischen Anschlüsse verlaufen analog in ähnlicher Weise wie in Figur 17 gezeigt.

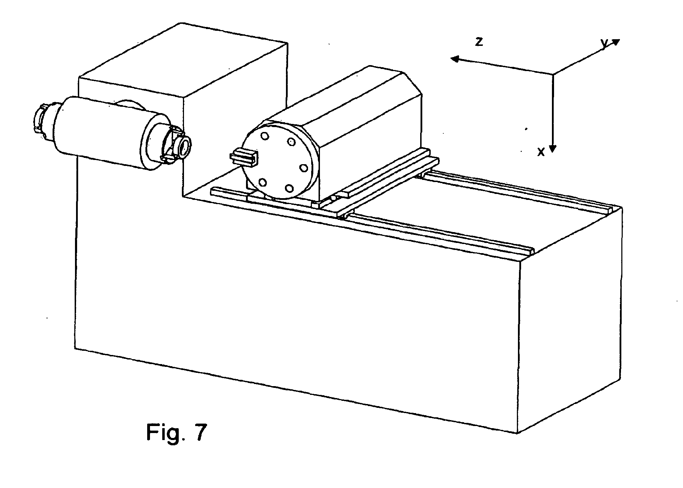

Figur 7 zeigt ein weiteres Ausführungsbeispiel, das gegenüber den aus Figur insgesamt und 90 Grad gedreht im Raum orientiert ist, so dass der Werkzeugrevolveraufbau in der x-y-Ebene verfahrbar ist. Eine solche Orientierung von Spindeln und Revolver kann in bestimmten Anwendungsfällen von Vorteil sein.

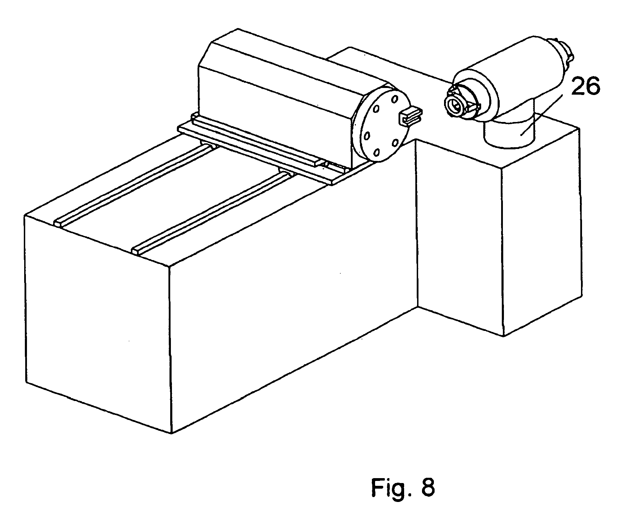

Figur 8 zeigt ein weiteres Ausführungsbeispiel, bei dem in Abwandlung zu dem aus Figur 6 der Werkzeugrevolveraufbau in der y-z-Ebene verschiebbar ist;

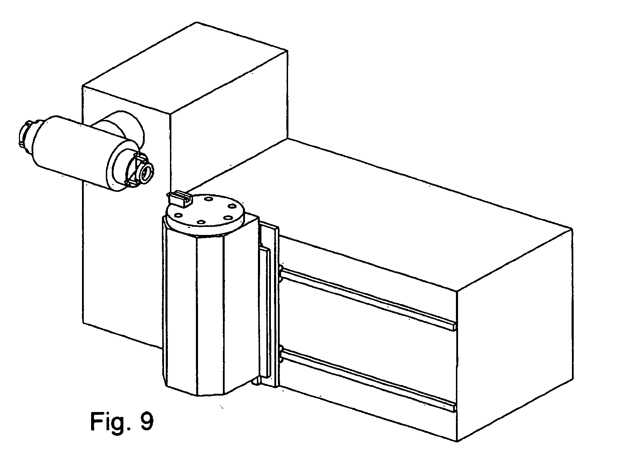

Figur 9 zeigt ein weiteres Ausführungsbeispiel analog zu Figur 8, das jedoch als Ganzes um 90 Grad gedreht ist;

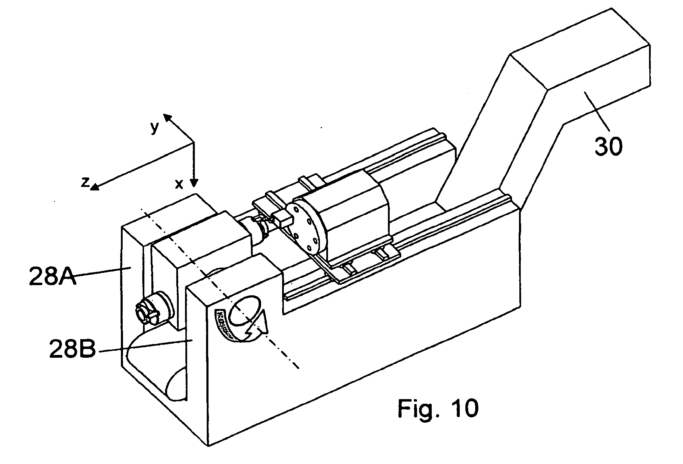

Figur 10 zeigt ein weiteres Ausführungsbeispiel, bei dem der Spindelträger auf einer Achse gelagert ist, die in y-Richtung verläuft und an beiden gegenüberliegenden Seiten des Spindelträgers ein Auflager 28A, 28B am Gestell der Drehmaschine besitzt. Die Kabelzuführungen können durch das die Schwenkachse bildende Bauteil hindurch verlaufen, die zu diesem Zweck hohl ausgebildet sein kann.

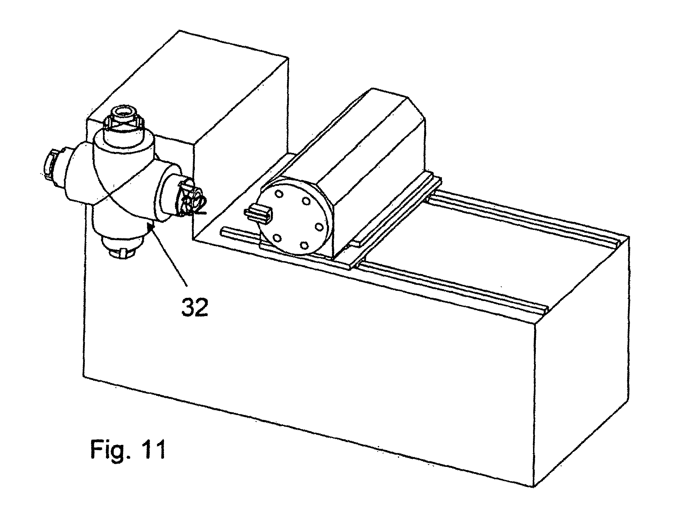

Die Figur 11 zeigt ein Ausführungsbeispiel, bei dem ein Spindelträger 32 mit vier Spindeln vorgesehen ist, die in einer Kreuzanordnung am Spindelträger befestigt sind, und wobei die Schwenkbewegung um die y-Achse verläuft und wobei der Werkzeugrevolveraufbau in der y-z-Ebene in z- Richtung und y- Richtung verfahrbar ist;

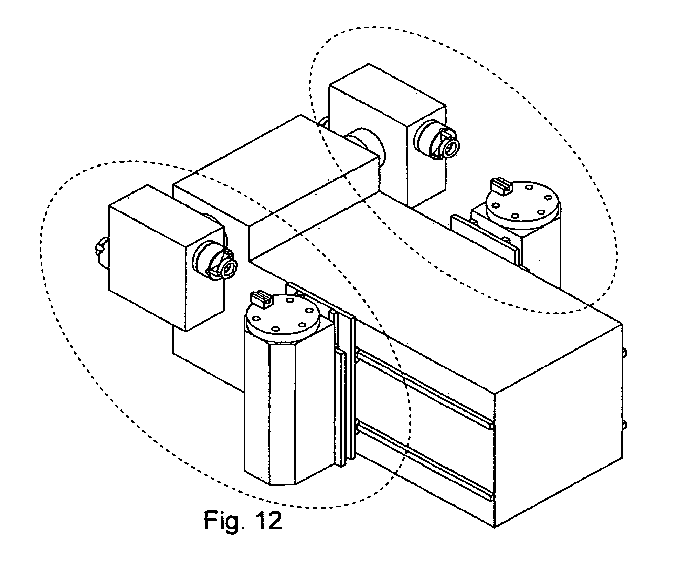

Durch die erfindungsgemäße, in Figur 11 gezeigte vierfache Anordnung von Spindeln auf einem sogenannten Kreuzspindelträger 32 erhält man deutlich mehr Möglichkeiten, um die Werkstücke zu wechseln bzw. neu einzuspannen. Beispielsweise kann in der nach unten zeigenden Stellung das frisch bearbeitete Werkstück entfernt werden. Gleichzeitig kann in der in Figur 12 nach links zeigenden Werkstückaufnahme das neu zu bearbeitende Werkstück eingesetzt werden und in der nach oben zeigenden Werkstückaufnahme kann das frisch eingesetzte Werkstück jeweils eingespannt werden. Dies ermöglicht deutlich größere Freiräume für eine praktisch vollständige Automatisierung des Werkstückwechsels.

Figur 12 zeigt ein weiteres Ausführungsbeispiel, bei dem in Abwandlung zum Ausführungsbeispiel von Figur 2 nicht nur eine einzige Seitenfläche des Drehmaschinengestells mit Spindelträger und Werkzeugschlitten versehen ist, sondern auch die gegenüberliegenden, dazu parallele Seitenfläche ebenfalls mit einer solchen Anordnung versehen ist. Beide Anordnungen sind zur besseren Klarheit gestrichelt umrandet.

Das in Figur 12 gezeigte Ausführungsbeispiel ist als weitere Variante zu sehen, wie das erfinderische Prinzip noch weiter verfeinert werden kann. Dadurch, dass praktisch identische Arbeiten an einer einzigen Maschine, aber an zwei gegenüberliegenden Seiten von ihr durchgeführt werden können, ergibt sich eine praktisch doppelt so große Arbeitseffizienz der Drehmaschine. In weiterer Abwandlung (nicht gezeichnet) können die beiden jeweiligen Anordnungen aus Schwenkspindel und Werkzeugrevolver auch noch etwas in z-Richtung versetzt angeordnet werden, falls dies das Handling beim Werkstückwechsel erleichtert oder falls dies vom Bauraum innerhalb des Aufsatzes notwendig sein sollte, der die beiden Schwenkachsen aufnimmt. Gemäß einer besonderen Ausführung dieses Beispiels kann auch nur eine einzige Schwenkachse für die beiden gegenüberliegenden Werkstückspindeln vorgesehen sein. Dann arbeitet die Drehmaschine völlig synchron auf ihren beiden gegenüberliegenden Bearbeitungsräumen.

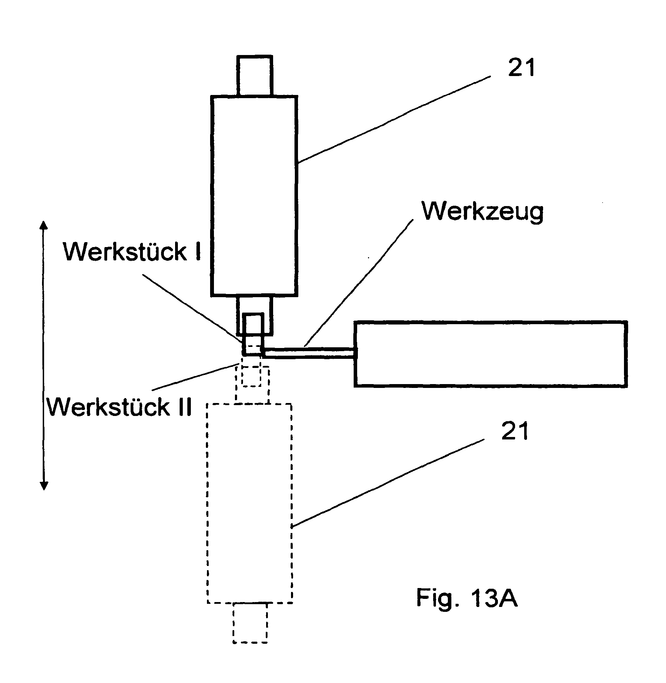

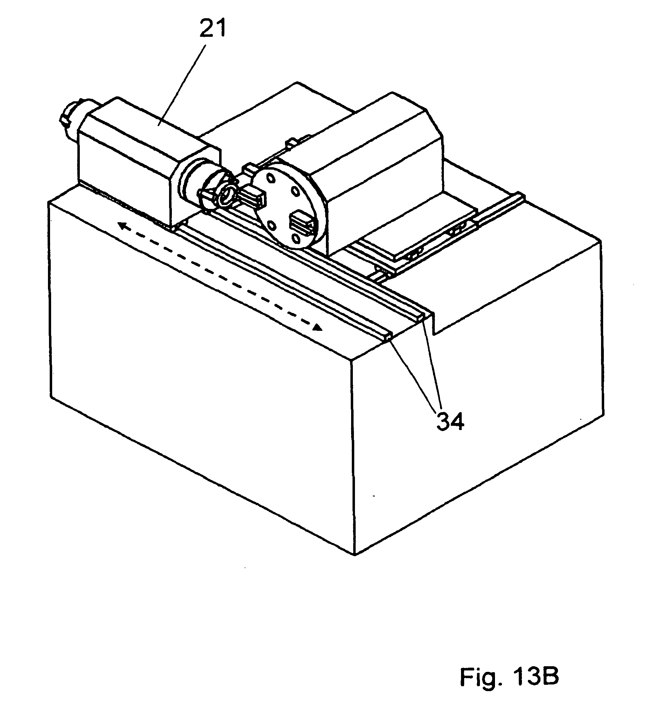

Figur 13A zeigt schematisch und 13B zeigt in der vereinfachten Darstellung ähnlich der anderen vorstehenden Figuren ein weiteres Ausführungsbeispiel einer erfindungsgemäßen Drehmaschine, bei der der Spindelträger 21 zwei Spindeln trägt, deren Achsen übereinstimmen, wobei aber der Spindelträger 21 nicht verschwenkt wird, sondern translatorisch in Figur 13A von der durchgezogen gezeichneten, oberen Stellung in die gestrichelte, untere Stellung verfahren wird, um die jeweils andere Spindel in den Bearbeitungsraum zu bringen; In Figur 13B ist die Werkstückspindel an ihrem Träger 21 bidirektional in Richtung des Doppelpfeils längs einer dafür vorgesehenen linearen Schienenführung 34 verfahrbar. Eine gegebenenfalls vorhandene CNC- Vorschubsteuerung des Werkzeugs für Werkstück II - siehe Figur 13A - kann fast identisch zu der für Werkstück I implementiert sein, da sie kinematisch gesehen lediglich umgekehrt ist. Als Antrieb kann ebenfalls auf Stand der Technik zur translatorischen Bewegung zurückgegriffen werden, beispielsweise per Servomotor als Verfahrmotor mit Zahnrad und Eingriff in eine beweglich gelagerte Zahnstange.

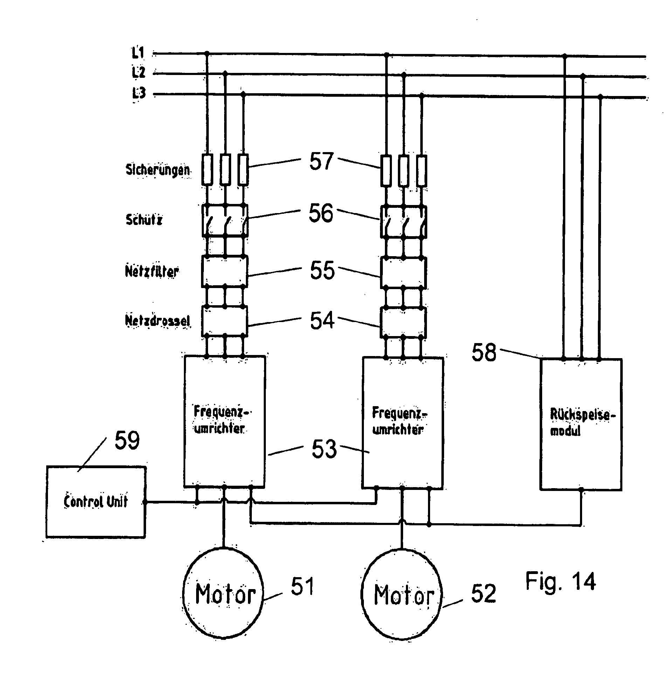

Figur 14 zeigt eine schematische Schaltskizze zur Rückspeisung von elektrischem Strom beim Abbremsen einer Spindel: Um den Wirkungsgrad der erfindungsgemäßen Drehmaschine zu erhöhen, koppelt man zunächst die Antriebe - siehe hier die Motoren 51 und 52 für die schnelle und präzise Drehbewegung der Werkzeugrevolvern - über einen DC-Verbund. Dieser Gleichstromverbund wird beispielsweise im Wesentlichen aus identisch für jeden der beiden Motoren gebildeten elektrischen Schaltungen aus einer Reihenschaltung aus je einem Frequenzumrichter 53, einer diesem nachgeschalteten üblichen Netzdrosseleinrichtung 54, einem üblichen Netzfilter 55 zur Eliminierung von Störströmen und Störspannungen, einem Schütz 56, sowie Sicherungen 57 für die jeweils dreifach vorhandenen Phasen eines jeden Elektromotors 51 bzw. 52 gebildet.
So wird die generatorisch erzeugte Energie direkt an andere Antriebseinheiten abgegeben. Die dann noch eventuell vorhandene überschüssige Energie wird dann über eine Rückspeiseeinheit 58 in das Netz eingespeist. Eine Steuereinheit 59 steuert die Freuquenzumrichter 51 an.

Auch eine DC-Kopplung ohne Rückspeiseeinheit 58 ist sinnvoll, weil auch so ebenfalls erheblich Energie eingespart werden kann.

Diese Anwendungen sind im Stand der Technik an sich bekannt und werden bereits in der Stahl und Textilindustrie eingesetzt.

Ein weiterer Vorteil ist, dass die überschüssige Energie nicht in Wärme umgewandelt wird und somit Kühlaggregate nicht oder in kleinerer Ausführung notwendig sind. Weitere Kosten werden reduziert, da der Spitzenverbrauchswert vermindert wird, was ein wesentlicher Faktor für die Berechnung des Energieversorgers ist.

Figur 15 zeigt die Schwenkspindel gemäß Figur 1D schematisch im Schnitt der Linie A-A von Figur 1D.

Figur 16 zeigt die Schwenkspindel schematisch im Schnitt längs der Linie B-B in Figur 1D.

Fig. 17 zeigt die Schwenkspindel schematisch zusätzlich im Schnitt längs der Linie C-C in Figur 1E.

In dem drehbar gelagertem Spindelgehäuse 24 sind zwei Spindeln 20A und 20B mit jeweiligen Motoren eingebaut, die durch eine zentrale Öffnung 82 (Leitungen nicht dargestellt) mit elektrischer Energie, Druckluft und Kühlwasser versorgt werden.
Die Drehbewegung des Spindelgehäuses 24 erfolgt in dieser Darstellung mittels eines Servomotors -siehe Motor 86 in Figur 15 - mit einem Ritzel 106 und einem Zahnkranz, siehe Zahnkranz 84 in Figur 15. Über ein Messsystem 102 wird der Drehwinkel des Gehäuses 24 erfasst und synchron zur Drehung elektronisch ausgewertet, damit das Spindelgehäuse im richtigen Winkel zum Stillstand kommt. Ist dies geschehen, wird das Spindelgehäuse mit einer hydraulisch betätigten Planverzahnung blockiert und im Rahmen der notwendigen Wiederholgenauigkeit positioniert.

In Figur 17 sind noch weitere Elemente des gezeigten Systems gezeigt wie Kühlkanäle 96, die jedoch sämtlich im Stand der Technik bekannt sind.

Der Fachmann erkennt, dass die Schwenkspindelanordnung im Prinzip dadurch hergestellt werden kann, dass auf einem schwenkbar gelagerten und mit einem Schwenkantrieb versehenen "Schwenktisch" nur die beiden Motordrehspindeln aufgesetzt und dort an der richtigen Stelle fixiert werden müssen, damit mit der erforderlichen Genauigkeit die Werkstücke der beiden Spindeln jeweils an dem identischen Bearbeitungsort befindlich sind.

Folgende Hersteller kommen unter anderen für die folgenden Elemente der erfindungsgemäßen Drehmaschine beispielsweise in Frage:
Spindeln:
   Fa. Weiss, 97424 Schweinfurt, Fa. GMN, 90411 Nürnberg, Fa. Diebold, 72417 Jungingen, Fa. Hugo Reckert, 70794 Filderstadt, Fa. TS Technologie&Service, 97440 Werneck, Fa. SPL Spindel und Präzisionslager, 08427 Fraureuth.
Drehfutter:
   Fa. Röhm, 89567 Sontheim, Fa. Schunk, 74348 Lauffen, Fa. Kitagawa (Japan), erhältlich von H. Sartorius Nachf. GmbH & Co.KG, 40837 Ratingen, Fa. SMW Autoblok, 88074 Meckenbeuren.
Werkzeugrevolver:
   Fa. Sauter, 72555 Metzingen, Fa. Zeisberg, 65719 Hofheim.
Rundschalttische:
   Fa. Fibro, 74189 Weinsberg, Fa. Weiss, 97424 Schweinfurt.

Für das Verschwenken der Spindelbox sind die notwendigen Bauteile im Standardangebot von Herstellern von Werkzeugrevolvern und sogenannten Rundschalttischen erhältlich. Das betrifft im Besonderen den Antriebmotor mit Ritzel und Zahnkranz ebenso die Lagerung und die Indexierung.

Die Indexierung erfolgt meist mittels über Plan- Hirthverzahnungen, aber Bolzen o.ä. sind ebenso möglich. Als Lagerung kommen meist Wälzlager in Betracht. Aber auch Gleitlager und hydrostatische Lager können eingesetzt werden.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Schließlich können die Merkmale der Unteransprüche und des Hauptanspruchs im wesentlichen frei miteinander und nicht durch die in den Ansprüchen vorliegende Reihenfolge miteinander kombiniert werden, sofern sie unabhängig voneinander sind.

### Bezugszeichenliste:

10 Drehmaschine
12 Gestell
14 Maschinenbett
15 Bearbeitungsraum
16 Werkzeugschlitten
17 Aufsatz
18 Werkzeugrevolver
19 Werkzeug
20A Werkstückspindel im Bearbeitungsraum
20B Werkstückspindel in dem Entladeraum für Werkstückwechsel
21 Spindelträger
22 Spannmittel zum Einspannen des Werkstücks
23 Steuermodul
24 Spindelträgergehäuse
25 Reitstock
26 Spindelträger mit Abstandhalter
28A, 28B Seitenwange mit Auflager
30 Späneförderer
32 4-fach Kreuzspindelträger
34 lineare Schienenführung
48 Werkstück
50 elektrische Anschlüsse für Motor und Steuerung der Antriebselektronik
72 Spannbacken
74 Drehfutter
76 Planverzahnung
78 Axiallager
80 Radiallager
82 Durchführungsöffnung für Strom, Wasser, etc.
84 Zahnkranz
86 Servomotor
88 Maschinenbett
90 Spindellager
92 Rotor
94 Stator
96 Kühlkanäle
98 Versorgungsleitungen
100 Spannzylinder
102 Messsystem
106 Ritzel

## Patentansprüche

1. Drehmaschine (10) mit einer Spindel (20) und Spannmitteln (22) zum Einspannen eines Werkstücks (48), mit einem ein oder mehrere Werkzeuge (19) aufnehmenden Werkzeugträger (18), insbesondere Werkzeugrevolver, wobei
a) eine Mehrzahl von Werkstückspindeln (20) an einem Spindelträger (21) angebracht sind, und
b) der Spindelträger (21) einen Verfahrmechanismus aufweist, der gleichzeitig eine erste Werkstückspindel (20A) aus einem der Werkstückbearbeitung dienenden Bearbeitungsraum (15) herausbewegt und eine zweite Werkstückspindel (20B) in den Bearbeitungsraum (15) hineinbewegt, **gekennzeichnet dadurch, dass**
c) die Werkstückspindeln (20) jeweils über einen separaten Elektromotor verfügen.

2. Drehmaschine nach Anspruch 1, wobei der Verfahrmechanismus als Schwenkmechanismus ausgebildet ist.

3. Drehmaschine nach einem der vorstehenden Ansprüche, wobei eine Antriebssteuerung für die Werkstückspindeln (20) vorgesehen ist, die die eine Werkstückspindel beschleunigt und die andere zeitgleich abbremst.

4. Drehmaschine nach einem der vorstehenden Ansprüche, wobei eine einzige Antriebselektronik für die Schwenkbewegung der Mehrzahl von Werkstückspindeln (20A, 20B) vorgesehen ist, wobei die Antriebselektronik auf die jeweils im Bearbeitungsraum befindliche Spindel aufgeschaltet ist.

5. Drehmaschine nach einem der vorstehenden Ansprüche, mit einer Steuerungsschaltung (23), die dafür schaltbar eingerichtet ist, dass einer der Elektromotoren zwecks Abbremsen einer zugehörigen Spindel als Generator betreibbar vorgesehen ist,
mit einer DC-Kopplungsschaltung, die die beiden Antriebsstränge für Drehbewegung der Mehrzahl von Werkstückspindeln (20) in einem Gleichstromverbund miteinander koppelt,
und mit einem Rückspeisemodul (58) zum zumindest teilweisen Rück-Einspeisen von elektrischer Energie in das Stromversorgungsnetz.

6. Drehmaschine nach einem der vorstehenden Ansprüche, wobei genau zwei Werkstückspindeln (20A, 20B) am Spindelträger (21) vorgesehen sind.

7. Drehmaschine nach einem der vorstehenden Ansprüche, wobei die Mehrzahl von Werkstückspindeln (20A, 20B) in einem Spindelträgergehäuse (24) in für die Werkzeugspindeln passenden Ausnehmungen angeordnet und fixiert sind.

8. Drehmaschine nach Anspruch 1, wobei der Verfahrmechanismus als translatorisch bewegender Mechanismus ausgebildet ist.

## Claims

1. Lathe (10) with a spindle (20) and chucking means (22) for chucking a workpiece (48), with a tool carrier (18), in particular a tool turret, which accommodates one or more tools (19), wherein
a) a plurality of workpiece spindles (20) are attached to a spindle carrier (21), and
b) the spindle carrier (21) has a traversing mechanism which simultaneously moves a first workpiece spindle (20A) out of a machining space (15) serving for the machining of the workpiece and moves a second workpiece spindle (20B) into the machining space (15), **characterized in that**
c) the workpiece spindles (20) each have a separate electric motor.

2. Lathe according to Claim 1, wherein the traversing mechanism is designed as a swivel mechanism.

3. Lathe according to either of the preceding claims, wherein a drive control is provided for the workpiece spindles (20), which drive control accelerates the one workpiece spindle and brakes the other at the same time.

4. Lathe according to one of the preceding claims, wherein a single electronic drive unit is provided for the swivelling movement of the plurality of workpiece spindles (20A, 20B), wherein the electronic drive unit is connected to the respective spindle located in the machining space.

5. Lathe according to one of the preceding claims, having a control circuit (23) which is set up for being switchable in such a way that one of the electric motors is provided in such a way as to be operable as a generator for the purpose of braking an associated spindle,
having a DC coupling circuit which couples together the two drive trains for the rotary movement of the plurality of workpiece spindles (20) in a direct-current interconnection,
and having a feedback module (58) for at least partly feeding back electrical energy into the power supply network.

6. Lathe according to one of the preceding claims, wherein precisely two workpiece spindles (20A, 20B) are provided on the spindle carrier (21).

7. Lathe according to one of the preceding claims, wherein the plurality of workpiece spindles (20A, 20B) are arranged and fixed in a spindle carrier housing (24) in apertures suitable for the workpiece spindles.

8. Lathe according to Claim 1, wherein the traversing mechanism is designed as a translationally moving mechanism.

## Revendications

1. Tour (10) avec une broche (20) et des moyens de serrage (22) pour le serrage d'une pièce (48), avec un porte-outils (18) comprenant un ou plusieurs outils (19), en particulier tourelle d'outils, dans lequel
a) une multiplicité de broches porte-pièce (20) sont installées sur un porte-broches (21), et
b) le porte-broches (21) comporte un mécanisme de déplacement qui, de manière simultanée, fait sortir une première broche porte-pièce (20A) hors d'une chambre d'usinage (15) servant pour l'usinage de la pièce et introduit une deuxième broche porte-pièce (20B) dans la chambre d'usinage (15),
**caractérisé en ce que**
c) les broches porte-pièce (20) sont respectivement équipées d'un moteur électrique séparé.

2. Tour selon la revendication 1, dans lequel le mécanisme de déplacement se présente sous la forme d'un mécanisme de pivotement.

3. Tour selon l'une quelconque des revendications précédentes, dans lequel il est prévu une unité de commande d'entraînement pour les broches porte-pièce (20), qui accélère la première broche porte-pièce et simultanément ralentit l'autre.

4. Tour selon l'une quelconque des revendications précédentes, dans lequel il est prévu une seule électronique d'entraînement pour le mouvement pivotant de la multiplicité de broches porte-pièce (20A, 20B), dans lequel l'électronique d'entraînement est chaque fois commutée sur la broche qui se trouve dans la chambre d'usinage.

5. Tour selon l'une quelconque des revendications précédentes,
avec un circuit de commande (23), qui est conçu sous forme commutable, de telle manière qu'un des moteurs électriques soit prévu pour fonctionner en générateur pour ralentir une broche correspondante,
avec un circuit de couplage CC, qui couple l'une à l'autre, en une liaison à courant continu, les deux lignes d'entraînement pour le mouvement de rotation de la multiplicité de broches porte-pièce (20), et
avec un module de retour (58), pour le renvoi au moins partiel d'énergie électrique dans le réseau de distribution électrique.

6. Tour selon l'une quelconque des revendications précédentes, dans lequel il est prévu exactement deux broches porte-outil (20A, 20B) sur le porte-broches (21).

7. Tour selon l'une quelconque des revendications précédentes, dans lequel la multiplicité de broches porte-outil (20A, 20B) sont disposées et sont fixées dans des évidements adaptés pour les broches porte-outil dans une enceinte de porte-broches (24).

8. Tour selon la revendication 1, dans lequel le mécanisme de déplacement se présente sous la forme d'un mécanisme à mouvement de translation.
